# EUROPEAN PATENT APPLICATION

(11) **EP 3 444 763 A1**
(43) Date of publication of application: **20.02.2019**
(21) Application number: 18189513.7
(22) Date of filing: 17.08.2018
(51) Int. Cl.: G06Q 10/06, G06Q 50/30

(54) **CUMULATIVE MODEL FOR SCHEDULING AND RESOURCE ALLOCATION FOR AIRLINE OPERATIONS**

(30) Priority: 18.08.2017 US 201762547183 P; 25.07.2018 US 201816044895
(71) Applicant: General Electric Company, Schenectady, NY 12345 (US)
(72) Inventor: ARGUELLO, Michael, Austin, TX Texas 78701 (US); HARRINGTON, Mark Thomas, Cheltenham, Gloucestershire GL52 8SF (GB); NARKAJ, Alexander, San Ramon, CA California 94583 (US); DUNSDON, Jonathan Mark, San Ramon, CA California 94583 (US); DESHMUKH, Dinakar, Cincinnati, OH Ohio 45215 (US)
(74) Representative: Williams, Andrew Richard

(57) **Abstract**

Systems, computer-implemented methods and/or computer program products that facilitate airline operations and planning management are provided. In one embodiment, a system 100 utilizes a processor 102 that executes computer implemented components stored in memory 104. A model generation component 108 generates a model 110 of a set of influencers 107 that affect the airline operations. An input component 106 receives data regarding state of a subset of the influencers 107. An impact component 114 employs the model 110 to determine impact of the state of respective influencers 107 on the airline operations. A scheduling component 116 modifies the airline operations as a function of the determined impact. An update component 118 updates the model 110 to improve model fidelity as a function of collected airline performance data that becomes available after the airline operations have been modified by the scheduling component 116.

## Description

### PRIORITY CLAIM

This application claims the benefit of U.S. Provisional Application Serial No. 62/547,183, filed on August 18, 2017, and entitled "CUMULATIVE MODEL FOR SCHEDULING AND RESOURCE ALLOCATION FOR AIRLINE OPERATIONS." The entirety of this provisional application is incorporated herein by reference.

### TECHNICAL FIELD

The subject disclosure relates to systems, computer-implemented methods and/or computer program products facilitating prediction of impact of influencers in connection with airline operations, and more specifically, facilitating generation of models that utilize artificial intelligence or machine learning for scheduling and resource allocation to improve airline operations and planning management.

### SUMMARY

The following presents a summary to provide a basic understanding of one or more aspects of the invention. This summary is not intended to identify key or critical elements, or delineate any scope of the particular aspects or any scope of the claims. Its sole purpose is to present concepts in a simplified form as a prelude to the more detailed description that is presented later. In one or more aspects described herein, devices, systems, computer-implemented methods, apparatus and/or computer program products that facilitate airline operations and planning management are described.

According to one aspect, a system is provided. The system can comprise a memory that stores computer executable components. The system can also comprise a processor, operably coupled to the memory, and that can execute computer executable components stored in the memory. The computer executable components can comprise a model generation component that generates a model of a set of influencers that affect the airline operations. The computer executable components can further comprise an input component that receives data regarding state of a subset of the influencers. The computer executable components can further comprise an impact component that employs the model to determine impact of the state of respective influencers on the airline operations. The computer executable components can further comprise a scheduling component that modifies the airline operations as a function of the determined impact. The computer executable components can further comprise an update component that updates the model to improve model fidelity as a function of collected airline performance data that becomes available after the airline operations have been modified by the scheduling component.

According to another aspect, a computer-implemented method is provided. The computer-implemented method can comprise generating, by a system operatively coupled to a processor, a model of a set of influencers that affect the airline operations. The computer-implemented method can further comprise receiving, by the system, data regarding state of a subset of the influencers. The computer-implemented method can further comprise employing, by the system, the model to determine impact of the state of respective influencers on the airline operations. The computer-implemented method can further comprise modifying, by the system, the airline operations as a function of the determined impact. The computer-implemented method can further comprise updating, by the system, the model to improve model fidelity as a function of collected airline performance data that becomes available after the airline operations have been modified by the scheduling component.

According to another aspect, a computer program product is provided. The computer program product can comprise a computer readable storage medium having program instructions embodied therewith. The program instructions can be executable by a processor to cause the processor to generate a model of a set of influencers that affect the airline operations. The program instructions can further be executable by a processor to cause the processor to receive data regarding state of a subset of the influencers. The program instructions can further be executable by a processor to cause the processor to employ the model to determine impact of the state of respective influencers on the airline operations. The program instructions can further be executable by a processor to cause the processor to modify the airline operations as a function of the determined impact. The program instructions can further be executable by a processor to cause the processor to update the model to improve model fidelity as a function of collected airline performance data that becomes available after the airline operations have been modified by the scheduling component.

### DESCRIPTION OF THE DRAWINGS

FIG. 1 illustrates a block diagram of an example, non-limiting system facilitating airline operations and planning management in accordance with one or more embodiments described herein.
FIG. 2 illustrates a block diagram of an example, non-limiting system facilitating airline operations and planning management including a notification component in accordance with one or more embodiments described herein.
FIG. 3 illustrates a block diagram of an example, non-limiting system facilitating airline operations and planning management including an incentive component in accordance with one or more embodiments described herein.
FIG. 4 illustrates a block diagram of an example, non-limiting system facilitating airline operations and planning management including a tracking component in accordance with one or more embodiments described herein.
FIG. 5 illustrates a block diagram of an example, non-limiting system facilitating airline operations and planning management including an optimization component in accordance with one or more embodiments described herein.
FIG. 6 illustrates a block diagram of an example, non-limiting system facilitating airline operations and planning management including an avatar component in accordance with one or more embodiments described herein.
FIG. 7 illustrates an example, non-limiting computer-implemented method facilitating airline operations and planning management in accordance with one or more embodiments described herein.
FIG. 8 illustrates an example, non-limiting high-level diagram of unified operations of an aspect of the innovations in accordance with one or more embodiments described herein.
FIG. 9 illustrates a more granular view of the example, non-limiting high-level diagram of unified operations of an aspect of the innovations where various influencers (e.g., demand forecasting, fleet schedule, route schedule, maintenance (Mx) planning, crew assignment, asset assignment, operations, crew, gate, maintenance, passenger, assets, etc.) are shown in accordance with one or more embodiments described herein.
FIG. 10 illustrates an example, non-limiting flow diagram representative of example dynamic optimization of airline operations in accordance with one or more embodiments described herein.
FIG. 11 illustrates an example, non-limiting planning pipeline in accordance with an aspect of the invention the system can learn from scheduled versus actual flown performance data to optimize network planning and minimize risks in accordance with one or more embodiments described herein.
FIG. 12 illustrates an example, non-limiting flow diagram representative of example dynamic optimization of airline operations utilizing continuous learning and operations feedback that can be implemented by the system in accordance with one or more embodiments described herein.
FIG. 13 illustrates an example, non-limiting computer-implemented method facilitating airline operations and planning management in accordance with one or more embodiments described herein.
FIG. 14 illustrates an example, non-limiting schematic block diagram of a computing environment in accordance with this specification in accordance with various aspects disclosed herein.
FIG. 15 illustrates an example, non-limiting block diagram of a computer operable to execute various implementations described herein.

### DETAILED DESCRIPTION

The following detailed description is merely illustrative and is not intended to limit embodiments and/or application or uses of embodiments. Furthermore, there is no intention to be bound by any expressed or implied information presented in the preceding Background or Summary sections, or in the Detailed Description section.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

One or more embodiments described herein relates to building a practical planning, scheduling and day of operations system for airlines. The systems, computer-implemented methods and/or computer program products described herein can build on augmenting transactional systems with feedback, learning, artificial intelligence, machine learning, supervisory logic and optimization. The techniques and tools described herein can provide a holistic approach to airline operations planning and consider multiple aspects of airline operations (e.g., aircraft, stands, gates, airport curfews, flight deck crew, cabin crew, passenger travel plans, revenue, cost, weather impacts, past performance, etc.) with different time horizons. Initial airline operations planning can have a time horizon of years, whereas day of operations planning can have a time horizon of hours. A holistic approach can provide a common interface and framework; allow technology evolution, insertion and integration to generate optimal potential airline operations planning in a consistent manner; and avoid current disjointed tools with potentially competing, conflicting objectives. Various aspects of airline operations and planning management can include an ability to synthesis plans associated with a simulation and analysis capability to determine likely outcome of the plans. A further feature can include an ability to improve performance, accuracy of synthesis, analysis and simulation elements through automated learning mechanisms such as machine learning and artificial intelligence.

Conventional airline operation systems generally work in a linear fashion, lacking feedback, learning and optimization. Proposed solutions have been suggested based on large scale optimization in a fully integrated way, but these proposals have and continue to prove impractical due to computational considerations. One or more embodiments described herein can utilize analytics, machine learning, artificial intelligence, feedback and supervisory optimization to create a practical approach to create a holistic schedule, plan and day of operations system for airlines. Furthermore, the embodiments herein can cover large scale feedback. For example, the embodiments herein can predict pre-planned scenarios for likely day of operations problems through the development of those scenarios from real life operating conditions.

The embodiments described herein can break down the problem of airline operations in relevant portions and build an over-arching supervisory control system with artificial intelligence/machine learning (AI/ML). Feedback can be employed to provide a practical solution that can be implemented, rather than the single big-bang solvers proposed conventionally that are computationally unrealistic. On an operational side, by using continuous learning, feedback and AI/ML the solutions can create truly holistic, optimal and robust schedules, plans and operations. Also, by working in this way behind a standard holistic application programming interface (API) the internal workings of the system can be evolved as technology evolves to allow more integrated optimization without forcing changes onto the rest of the systems in an airline. The embodiments herein can result in better planning, increased revenue, higher utilization, quicker reactions on day of operations, lower costs, less lost revenue and less churn on information technology (IT). An implementation can employ statistical models using historical data at a planning stage as applicable to day of operations. In another implementation, schedules can be designed to enable recovery from weaknesses, e.g., baking in pathways to account for potential issues. In yet another implementation, data and models can be employed at local levels, networked levels, cloud-based levels and hybrids thereof. Accordingly, data can be learned across sets of verticals (e.g., aspects of airline operations, influencers, etc.) and highly robust models can be built and refined using data in a holistic manner. To such end, unified application programming interfaces (APIs) can be employed to enable cross-platform utilization of data and generated models. Furthermore, redundancies, contingencies and mitigating factors can be built into models and corresponding schedules to facilitate optimizing airline operations and resource utilization. Implementations can provide for optimization based on revenue, margins, etc. Yet another implementation can provide for dynamic dispatching and provisioning of services, assets and resources.

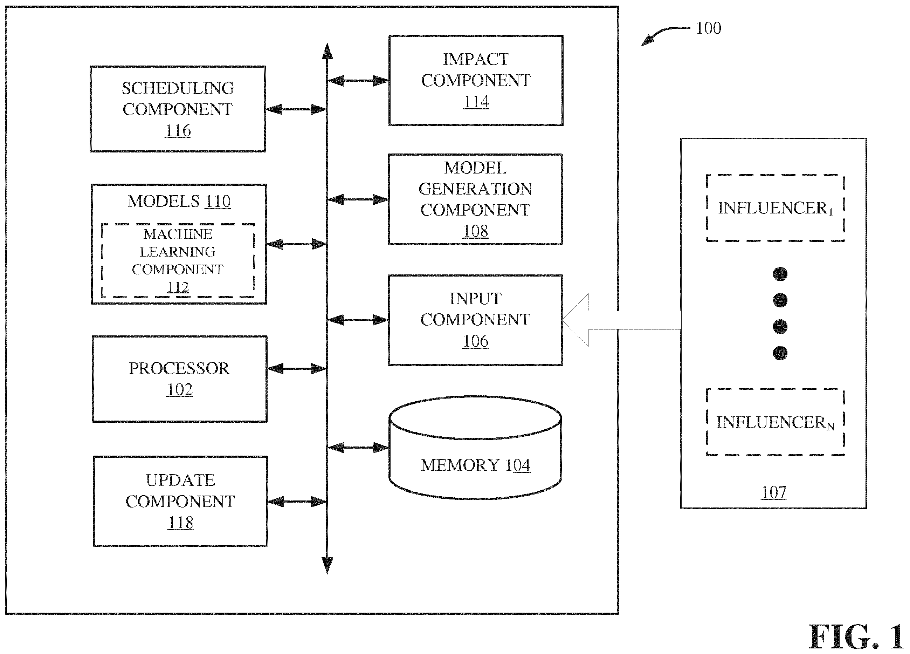

FIG. 1 illustrates a block diagram of an example, non-limiting system 100 facilitating airline operations and planning management in accordance with one or more embodiments described herein. Aspects of systems (e.g., system 100 and the like), apparatuses or processes explained in this disclosure can constitute one or more machine-executable components embodied within one or more machines, e.g., embodied in one or more computer readable mediums (or media) associated with one or more machines. Such components, when executed by the one or more machines, e.g., computers, computing devices, virtual machines, etc., can cause the machines to perform the operations described.

In various embodiments, the system 100 can be any suitable type of component, machine, device, facility, apparatus, and/or instrument that comprises a processor. In some embodiments, system 100 is capable of effective and/or operative communication with a wired and/or wireless network. Components, machines, apparatuses, devices, facilities, and/or instrumentalities that can comprise the system 100 can include, but are not limited to, tablet computing devices, handheld devices, server class computing machines and/or databases, laptop computers, notebook computers, desktop computers, cell phones, smart phones, consumer appliances and/or instrumentation, industrial and/or commercial devices, digital assistants, multimedia Internet enabled phones, multimedia players, and the like.

As illustrated in FIG. 1, the system 100 can comprise processor 102, memory 104, input component 106, model generation component 108, models 110, machine learning component 112, impact component 114, scheduling component 116 and/or update component 118. The processor 102 can execute computer executable components stored in the memory 104. It is to be appreciated that in some embodiments one or more system components can communicate wirelessly with other components, through a direct wired connection or integrated on a chipset.

In one or more embodiments described herein of system 100, predictive analytics can be used to automatically generate one or more models used by the system 100 to facilitate determining impact of the state of respective influencers on the airline operations. For example, the determination of the impact of the influencers can be based on information retained in a knowledgebase. As used herein, the term "knowledgebase" can be a database or other storage location or repository that can store one or more types of information. All such embodiments are envisaged.

The knowledgebase can comprise information related to one or more influencers. In some embodiments, the information related to the one or more influencers can be gathered over time and retained in the knowledgebase. Based on the obtained information, the system 100 can evaluate the knowledgebase (or multiple knowledgebases) and generate one or more patterns and/or can map information known about the influencers to the information known about other influencers. The predictive analytics of system 100 can determine that, if information of the influencer is similar to one or more other influencers, the influencers of the similar influencers can be utilized to facilitate determining impact of the state of respective influencers on the airline operations.

The computer processing systems, computer-implemented methods, apparatus and/or computer program products described herein can employ hardware and/or software to generate models that are highly technical in nature, that are not abstract and that cannot be performed as a set of mental acts by a human. For example, the one or more embodiments can perform the lengthy and complex interpretation and analysis on a copious amount of available information to generate the models and determine which models from the one or more models should be utilized for an influencer. In another example, the one or more embodiments can perform predictive analytics on a large amount of data to facilitate determining impact of the influencers with a high level of accuracy, even in the absence of detailed knowledge about the influencer. Accuracy can be evaluated by comparing a training set with a test set. After training a model employing a training set, accuracy can be calculated using a test set by computing percentage of output generated by the model running on the training set elements that matches a predicted target.

In various embodiments, the input component 106 can receive data (e.g., real-time data) regarding state of a subset of the influencers 107. For example, the input component 106 can receive data generated by a set of influencers 107 such as demand forecasting, fleet schedule, route schedule, Mx planning, crew assignment, asset assignment, operations, crew, gate, maintenance, passengers, assets, weather, aircraft crew arrival time and health, airport security, airport ground crew, airline ticket counters, aircraft components, air traffic control, other airplanes and associated influencers, luggage handling, airport trams, airport equipment, cloud-based services, networks and associated hardware/software, regional local and destination ground traffic, emergency response, local and federal authorities and agencies, sensors and like items that have an impact on the airline operations. The model generation component 108 can generate a model (e.g., models 110) of a set of influencers 107 that affect the airline operations. As used herein, the term "models 110" can mean one or more models 110. The models 110 can optionally and respectively include artificial intelligence and/or machine learning component 112. The machine learning component 112 can utilize data received by the input component 106 to score and rank the influencers 107 for insights on optimizing airline operations.

For example, data can come from digital twin models which can monitor real-time or inferred condition of components by employing sensors installed on or in proximity to aircraft components. The machine learning component 110 can score components based on a cumulative damage model (CDM), which seeks to determine the number of times an engine or a part has been exposed to a condition that accelerates degradation. For example, dust collecting on a part can lead that part to become hotter in operation and such temperature rise can reduce life from that part. Every time an engine or a part is exposed to a condition, damage is calculated to accumulate at a certain rate according to the type and frequency of the particular exposure. An analysis can be conducted to predict the number of remaining exposures the part can withstand before it should to be serviced or even scrapped. The models 110 or the machine learning component 112 can analyze influencer data with historical data utilizing physics-based, big data or data science to refine respective models. Big data can be for example operational, geographical, environmental, configuration and other data sets fused together. For example, atmospheric or airline workflow conditions that are measured at various frequencies for an airport can serve as valuable data with reference to data analysis in connection with building the models 110. The models 110 or the machine learning component 112 can employ artificial intelligence, physical domain expertise and other statistical methods to score and rank components and generate analytics regarding impact of respective influencers 107 on airline operations.

The models 110 or the machine learning component 112 can perform a recursive learning or backward propagation or continuous learning across unstructured subsets of data or across other models 110. Respective models 110 can comprise a neural network and a Bayesian network, but not limited to these techniques, and can interact with one another. Furthermore, the models 110 can cross learn across a set of models from all over. For example, the models 110 for an airline can feed information to the cloud so that the cloud model or the supermodel (e.g., models 110) can learn from all the discreet models 110 for an airline. The learned information can be used to feed back into the respective models 110 for an airline.

The impact component 114 can employ the models 110 to determine impact of the state of respective influencers 107 on the airline operations. The models 110 or machine learning component 112 can utilize historical data and statistical data at the planning stage, which can be months or years ahead of the day of operation, to detect a potential possibility of disruption. The machine learning component 112 can use historical data and statistical data to provide margins for producing a recoverable schedule. For example, the scheduling component 116 can design the schedule to have fallback positions. The scheduling component 116 can also use artificial intelligence, machine learning (not shown) or continuous feedback to resolve conflict, disagreement or discrepancies between the determined impact of the state of respective influencers on the airline operations. The scheduling component 116 can modify the airline operations as a function of the determined impact. For example, the scheduling component 116 can modify airline operations, including but not limited to, flight departure time as a function of a subset of the influencers 107. For example, the scheduling component 116 can modify the schedule as a function of crew arrival time, maintenance completion time, etc. Furthermore, the scheduling component 116 can schedule as a function of robustness of the system with respect to disruption, weaknesses or bottlenecks. In an example implementation, the input component 106 can receive information regarding waiting queues at ticket counters and security lines in an airport. The models 110 and the impact component 114 can assess the relevancy and potential impact of the respective queues with respect to flight operations and the scheduling component 116 can allocate resources (e.g., add manpower to the ticket counters and security to improve passenger flow, delay boarding of the aircraft, delay departure time, etc.) in order to successfully board all passengers and improve overall customer satisfaction.

The update component 118 can update the models 110 to improve model fidelity as a function of collected airline performance data that becomes available after the airline operations have been modified by the scheduling component 116. The update component 118 can update the models 110 using artificial intelligence and/or machine learning component 112. The models 110 can employ a recursive learning algorithm or backward propagation of learning across other models or continuous learning algorithm. For example, the models 110 can learn the impact of respective influencers 107 and direct the scheduling component 116 to revise airline operations as a function of the learned impact. The airline performance data resulting from the revised airline operations can be used to update and improve the models 110.

The embodiments of devices described herein can employ artificial intelligence (AI) to facilitate automating one or more features described herein. The components can employ various AI-based schemes for carrying out various embodiments/examples disclosed herein. In order to provide for or aid in the numerous determinations (e.g., determine, ascertain, infer, calculate, predict, prognose, estimate, derive, forecast, detect) described herein, one or more components can examine an entirety or a subset of data to which it is granted access and can provide for reasoning about or determine states of a system, environment, etc. from a set of observations as captured *via* events and/or data. Determinations can be employed to identify a specific context or action, and/or can generate a probability distribution over states, for example. The determinations can be probabilistic - that is, the computation of a probability distribution over states of interest based on a consideration of data and events. Determinations can also refer to techniques employed for composing higher-level events from a set of events and/or data.

Such determinations can result in the construction of new events or actions from a set of observed events and/or stored event data, whether or not the events are correlated in close temporal proximity, and whether the events and data come from one or several event and data sources. Components disclosed herein can employ various classification (explicitly trained (e.g., via training data) as well as implicitly trained (e.g., via observing behavior, preferences, historical information, receiving extrinsic information, etc.)) schemes and/or systems (*e.g*., support vector machines, neural networks, expert systems, Bayesian belief networks, fuzzy logic, data fusion engines, etc.) in connection with performing automatic and/or determined action in connection with the claimed subject matter. Thus, classification schemes and/or systems can be used to automatically learn and perform a number of functions, actions, and/or determinations.

A classifier can map an input attribute vector, z = (z1, z2, z3, z4, *zn*), to a confidence that the input belongs to a class, as by f(z) = *confidence*(*class*)*.* Such classification can employ a probabilistic and/or statistical-based analysis (*e.g*., factoring into the analysis utilities and costs) to determinate an action to be automatically performed. A support vector machine (SVM) is an example of a classifier that can be employed. The SVM operates by finding a hyper-surface in the space of possible inputs, where the hyper-surface attempts to split the triggering criteria from the non-triggering events. Intuitively, this makes the classification correct for testing data that is near, but not identical to training data. Other directed and undirected model classification approaches include, *e.g*., naive Bayes, Bayesian networks, decision trees, neural networks, fuzzy logic models, and probabilistic classification models providing different patterns of independence can be employed. Classification as used herein also is inclusive of statistical regression that is utilized to develop models of priority.

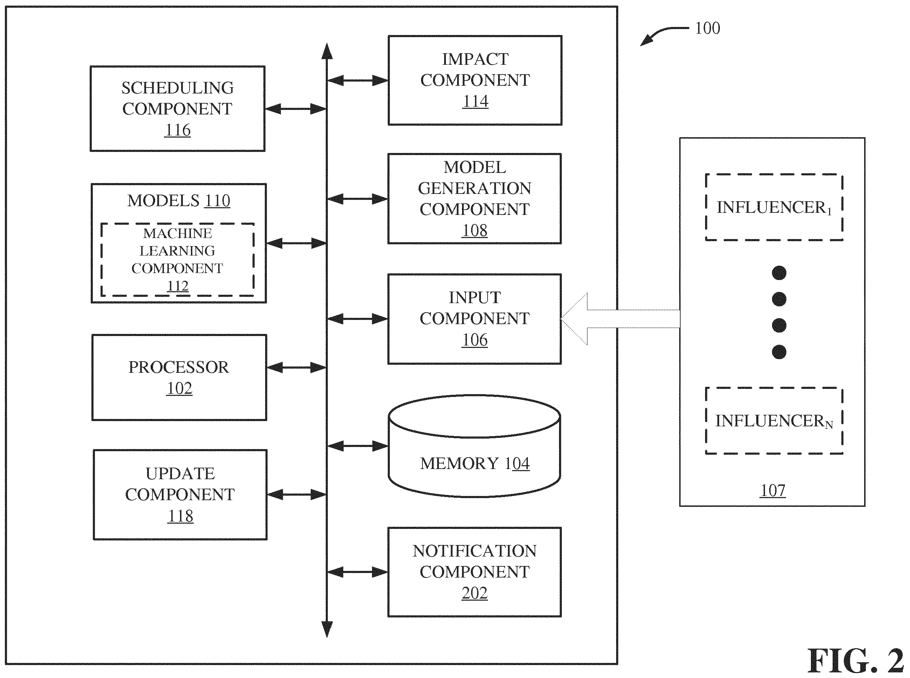

FIG. 2 illustrates a block diagram of an example, non-limiting system 100 facilitating airline operations and planning management including a notification component 202 in accordance with one or more embodiments described herein. Repetitive description of like elements employed in other embodiments described herein is omitted for sake of brevity. The notification component 202 can send a notification that can include routing and suggested departure from home to airport information to a passenger based on the impact information generated from the models 110 regarding at least one of airport security queue time, ticket counter queue time or road traffic information. Alternatively, as an example, the scheduling component 116 can also send notifications, via the notification component 202, to passengers while at home suggesting that the passengers leave for the airport early in view of the long lines at the ticket counter or security, or suggest checking in electronically and only bringing carry-on bags so as to avoid the ticket counter.

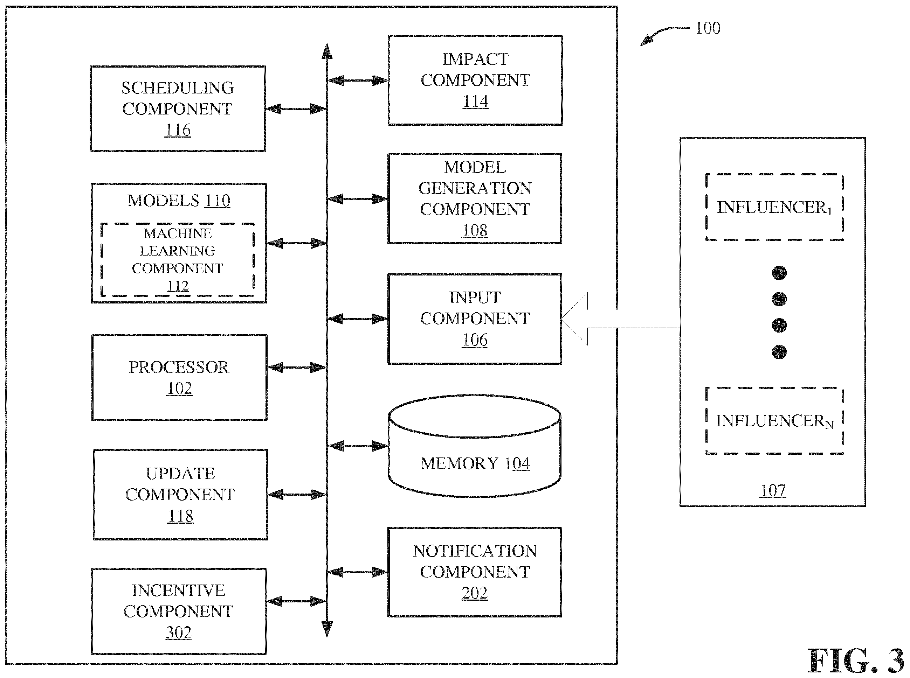

FIG. 3 illustrates a block diagram of an example, non-limiting system 100 facilitating airline operations and planning management including an incentive component 302 in accordance with one or more embodiments described herein. Repetitive description of like elements employed in other embodiments described herein is omitted for sake of brevity. The incentive component 302 can perform a utility-based analysis based on analysis by the models 110 and profiles of passengers to generate targeted incentives to a subset of the passengers. Instead of providing a blanket incentive to everyone, the incentive component 302 can provide an incentive that has a higher affinity for a particular subset of the passengers. For example, if a flight is overbooked, an airline can provide services such as airport pick up, hotel check in and dinner to compensate for the delay in taking a later flight.

In another implementation, the scheduling component 116 and the incentive component 302 can coordinate to schedule, sell or provision restaurant services to passengers as a function of the analysis by the models 110. For example, if a flight crew is delayed, the impact component 114 can assess the impact on airline operations and the impact on customer satisfaction, and the scheduling component 116 can coordinate with the incentive component 302 to offer gifts (e.g., free food tickets, free entertainment, etc.) to passengers to offset dissatisfaction associated with delayed flight.

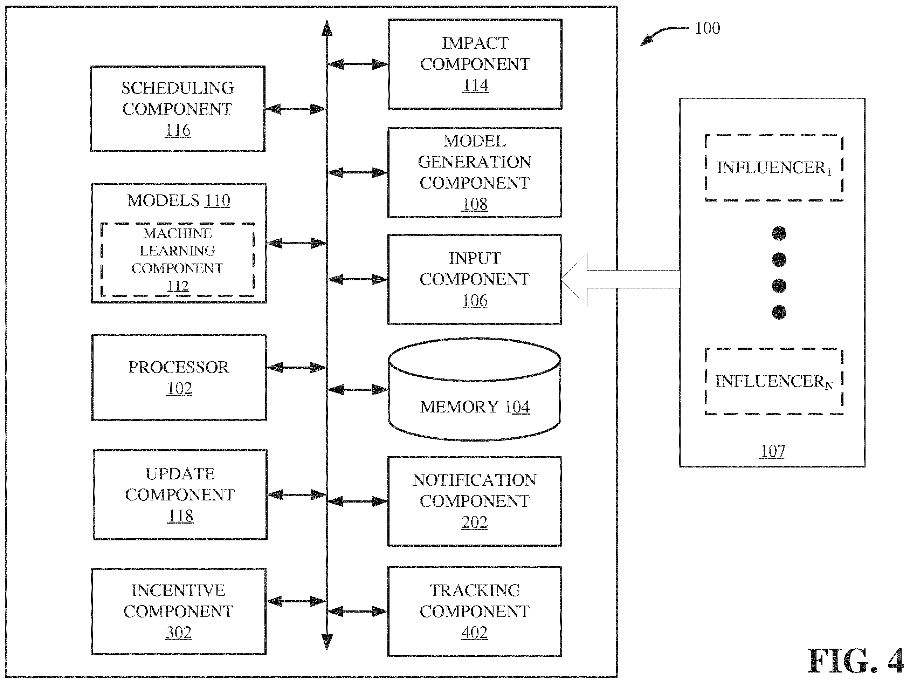

FIG. 4 illustrates a block diagram of an example, non-limiting system 100 facilitating airline operations and planning management including a tracking component 402 in accordance with one or more embodiments described herein. Repetitive description of like elements employed in other embodiments described herein is omitted for sake of brevity. The tracking component 402 can track in real-time passengers and influencers 107, and wherein the scheduling component 116 can schedule boarding of an airplane based on the tracking information. Passengers can be boarded as a function of passenger arrival to the ticket gate on a per passenger basis. For example, an airline can encourage early arrival to the departure gate by informing passengers that the order of boarding is based on the order of passenger arrival to the departure gate. Passengers that use a mobile application for an airline can opt in to allow the airline to track the passenger. For passengers that do not use the tracking feature, the airline can provide a departure gate arrival sign-in (e.g., kiosk sign in, scanning ticket, etc., at the departure gate).

The tracking can be performed through a global navigation system (e.g., global positioning system). The tracking information can also be used by the scheduling component 116 to assist passengers with transportation, guidance within a terminal, restaurant suggestions given window of time, etc., to enhance customer experience and overall airline operations. For example, the scheduling component 116 can provide restaurant suggestions, sent via the notification component 202, closer to the departure gate for a smaller window of time before takeoff. In another example, the scheduling component 116 can suggest the mode and route of transportation to the airport that is the fastest given the passenger's window of time left until boarding.

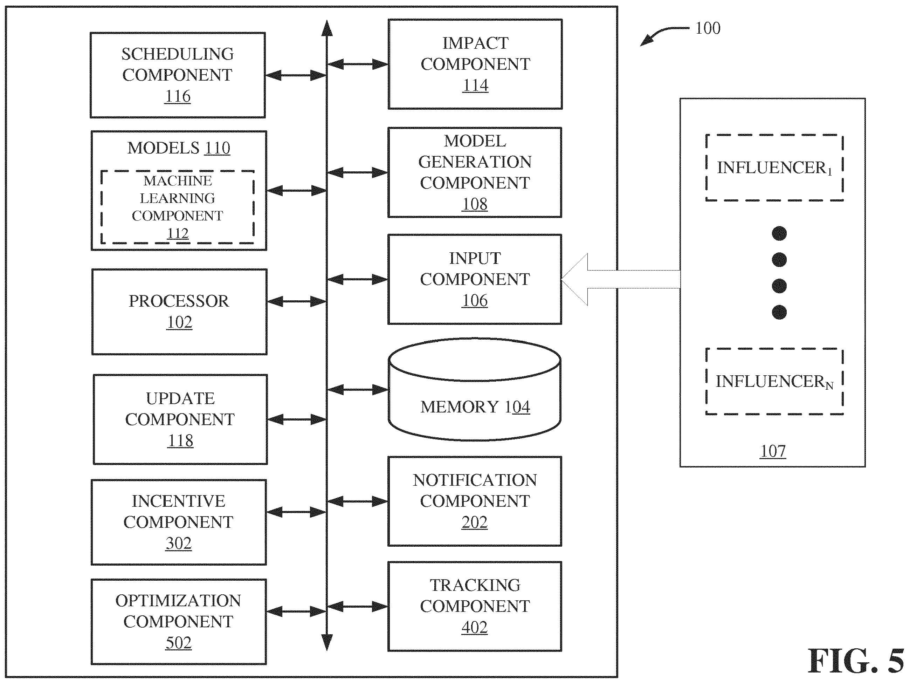

FIG. 5 illustrates a block diagram of an example, non-limiting system 100 facilitating airline operations and planning management including an optimization component 502 in accordance with one or more embodiments described herein. Repetitive description of like elements employed in other embodiments described herein is omitted for sake of brevity. The optimization component 502 can generate inferences, based on the models 110, regarding potential points of disruption, weaknesses or bottlenecks in the airline operations and direct the scheduling component 116 to revise the airline operations to facilitate optimizing the airline operations. The optimization component 502 can generate inferences based on feedback throughout the airline operations from the planning stage through the day of operation.

For example, if a certain crew is usually late, the optimization component 502 can generate an inference that this crew will probably be late again, which can be a potential point of disruption in the airline operations. This feedback regarding the tardiness of this crew can come from the feedback during the day of operations when this crew showed up late. The optimization component 502 can use the inference that the crew will probably be late again to direct the scheduling component 116 to schedule in extra time so the crew's tardiness does not disrupt the airline operations.

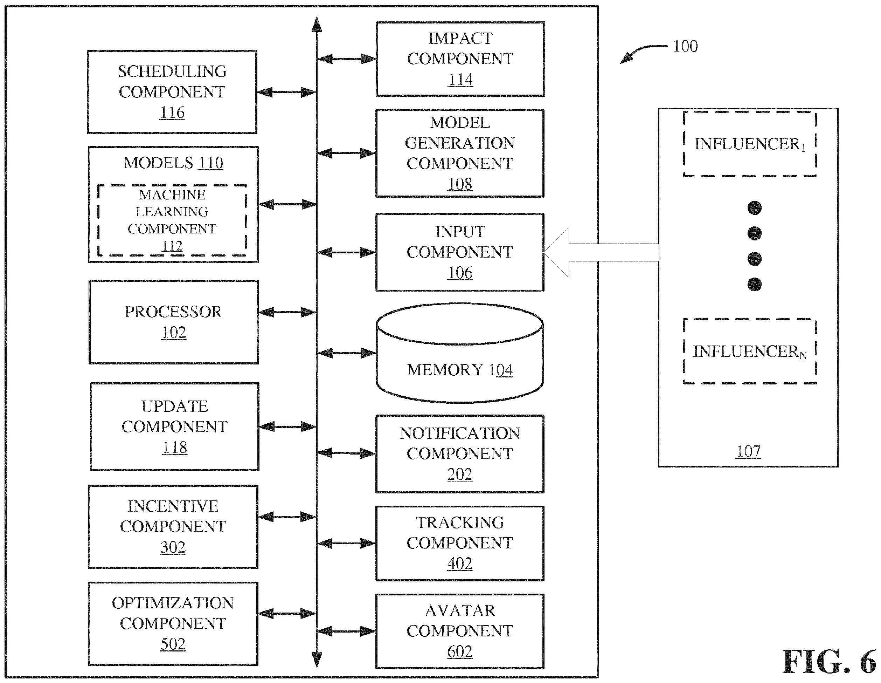

FIG. 6 illustrates a block diagram of an example, non-limiting system 100 facilitating airline operations and planning management including an avatar component 602 in accordance with one or more embodiments described herein. Repetitive description of like elements employed in other embodiments described herein is omitted for sake of brevity. The avatar component 602 can interface with the airline operations and scheduling personnel to provide suggestions based on the outputs of the models 110, the machine learning component 112, the impact component 114 or the scheduling component 116. The airline operations and scheduling personnel can interact with the avatar component 602 to obtain information. For example, the airline operations and scheduling personnel can request information regarding weather updates and how that will impact the flight schedule and crew scheduling.

The avatar component 602 can provide answers in both visual format or audio format. Visual format can include written texts, drawings, photos, charts, graphs, etc. Audio format can include audio recordings. The avatar component 602 can use one format at a time or both formats simultaneously. In addition to providing answers, the avatar component 602 can also provide suggestions. For example, the avatar component 602 can provide an update that there will be severe weather ahead that will result in canceled flight and crew rescheduling. The avatar component 602 can also provide suggestions on crew reassignment based on crew schedules and preferences.

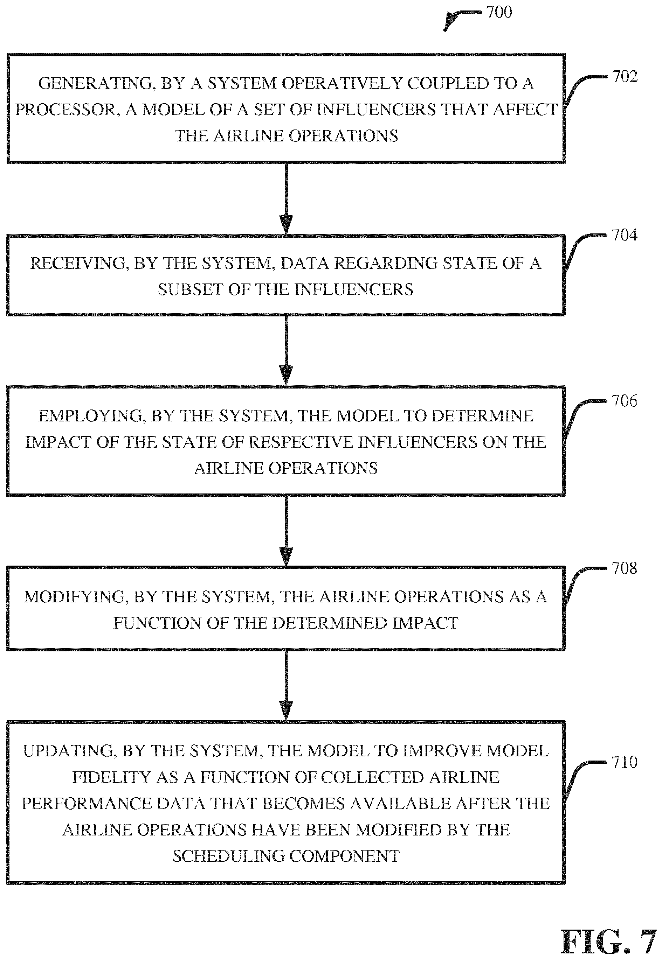

FIG. 7 illustrates an example, non-limiting computer-implemented method 700 facilitating airline operations and planning management in accordance with one or more embodiments described herein. At 702, the computer-implemented method 700 can comprise generating (e.g., via the model generation component 108), by a system operatively coupled to a processor, a model (e.g., models 110) of a set of influencers 107 that affect the airline operations. At 704, the computer-implemented method can comprise receiving (e.g., via the input component 106), by the system, data (e.g., real-time data) regarding state of a subset of the influencers 107. At 706, the computer-implemented method 700 can comprise employing (e.g., via the impact component 114), by the system, the model (e.g., models 110) to determine impact of the state of respective influencers 107 on the airline operations. At 708, the computer-implemented method 700 can comprise modifying (e.g., via the scheduling component 116), by the system, the airline operations as a function of the determined impact. At 710, the computer-implemented method 700 can comprise updating (e.g., via the update component 118), by the system, the model (e.g., models 110) to improve model fidelity as a function of collected airline performance data that becomes available after the airline operations have been modified by the scheduling component 116.

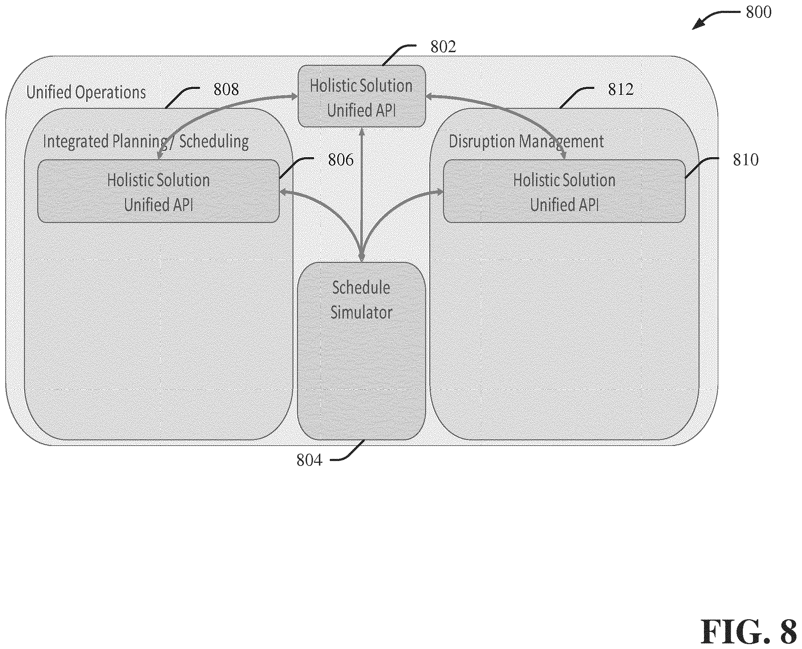

FIG. 8 illustrates an example, non-limiting high-level diagram of unified operations 800 of an aspect of the innovations in accordance with one or more embodiments described herein. Repetitive description of like elements employed in other embodiments described herein is omitted for sake of brevity. Airline operations have a number of independent systems or solvers that conduct network planning, long term planning, stand planning, catering, etc. These solvers can find solutions to the problems (e.g., influencers 107) presented within the independent systems (e.g., silos or verticals). However, these solvers do not provide an overall optimized holistic solution for airline operation disruption management. As illustrated in FIG. 8, the embodiments herein can build an intelligent layer over the underlying solutions to integrate the independent systems and generate an optimized disruption management scheduling tool that works in a holistic way. As technology evolves, airlines can change the individual solvers without disengaging the other individual solvers.

A unified set of application programming interfaces (APIs) such as a holistic solution unified API 802 can provide a total solution for an entire airline operation. The holistic solution unified API 802 can provide for coordinating data across different verticals (e.g., individual influencers) so that a schedule simulator 804 can simulate or model (e.g., via the model generation component 108) the influencers (e.g., influencers 107) to determine (e.g., via the impact component 114) impact of the influencers across respective verticals and optimize (e.g., via the optimization component 502) scheduling of resources accordingly. The holistic solution unified API 806 can provide the total solution for the influencers (e.g., influencers 107) impacting the integrated planning/scheduling 808 initially in the planning phase. The holistic solution unified API 810 can provide the total solution for the influencers (e.g., influencers 107) impacting the disruption management 812 that can occur on the day of operations. The holistic solution unified API 806 and the holistic solution unified API 810 can be combined and configured into the holistic solution unified API 802.

The schedule simulator 804 can test whether the total solution from the holistic solution unified API 802 will work and be robust to disruption. The schedule simulator 804 can test the effectiveness of the total solutions by simulating or modeling (e.g., via the model generation component 108) the influencers (e.g., influencers 107) to determine (e.g., via the impact component 114) impact of the influencers across the verticals and optimize (e.g., via the optimization component 502) scheduling of resources accordingly by configuring the solvers.

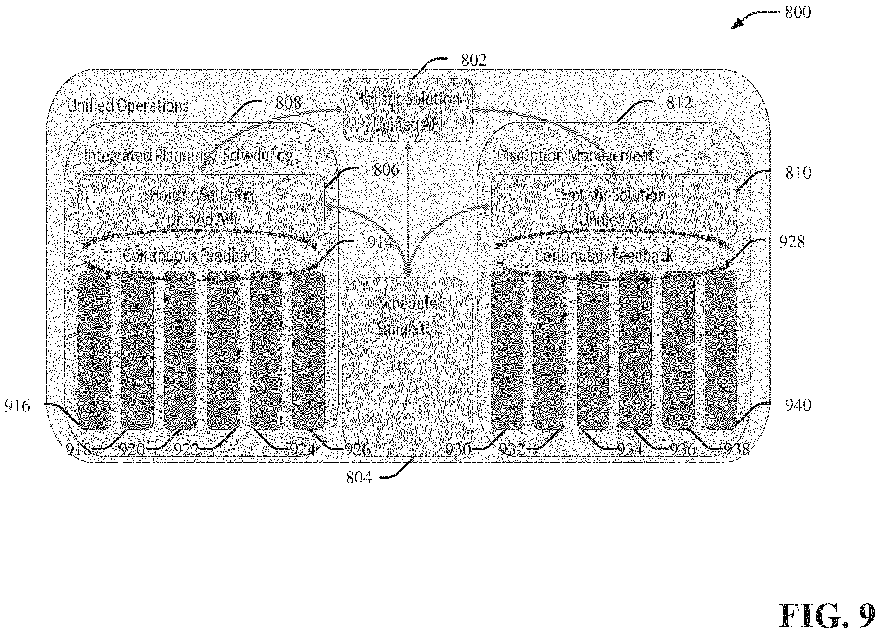

FIG. 9 illustrates a more granular view of the example, non-limiting high-level diagram of unified operations 800 of an aspect of the innovations where various influencers (e.g., demand forecasting, fleet schedule, route schedule, maintenance (Mx) planning, crew assignment, asset assignment, operations, crew, gate, maintenance, passenger, assets, etc.) are shown in accordance with one or more embodiments described herein. Repetitive description of like elements employed in other embodiments described herein is omitted for sake of brevity. As illustrated here in FIG. 9, the example, non-limiting influencers (e.g., influencers 107) that can affect the integrated planning/scheduling 808 in the initial planning phase are demand forecasting 916, fleet schedule 918, route schedule 920, Mx planning 922, crew assignment 924 and asset assignment 926. The example, non-limiting influencers (e.g., influencers 107) that can affect the disruption management 812 on the day of operations are operations 930, crew 932, gate 934, maintenance 936, passenger 938 and assets 940. Airlines can have independent systems or solvers to find solutions for these individual influencers, but these independent systems or solvers work independently in silos without connecting to one another.

The embodiments herein can configure the independent solvers to generate an integrated holistic solution. The unified operations 800 can use a supervisory optimization to combine the output of the independent solvers by configuring the different output into a practical holistic solution. The unified operations 800 can run the output from the independent solvers through the holistic solution unified APIs (e.g., holistic solution unified API 802, 806 and 810) to configure a holistic solution for these solvers (e.g., solvers of the influencers). The holistic solution unified API 806 can configure the solvers within the integrated planning/scheduling 808. The holistic solution unified API 810 can configure the solvers within the disruption management 812. The holistic solution unified API 802 can configure the solvers across the integrated planning/scheduling 808 and the disruption management 812 by combining the results from the holistic solution unified API 806 and the holistic solution unified API 810 into the holistic solution unified API 802. The schedule simulator 804 can test whether the holistic solution or recommendation will work and be robust to disruption. Feedback from the schedule simulator 804 can be sent back to the holistic solution unified API 802, 806 and 810 and respective solvers through the continuous feedback 914 and the continuous feedback 928. Furthermore, the integrated planning/scheduling 808 and disruption management 812 can use (e.g., via the scheduling component 116) artificial intelligence, machine learning or continuous feedback 914 and 928, respectively, to resolve conflict, disagreement or discrepancies between independent solvers (e.g., not shown or shown only as influencers) for influencers 916, 918, 920, 922, 924, 926, 930, 932, 934, 936, 938 and 940, respectively. For example, if solutions from different solvers conflict, the integrated planning/scheduling 808 and disruption management 812 can use (e.g., via the scheduling component 116) artificial intelligence, machine learning or continuous feedback 914 and 928, respectively, to adjust solution or request new solutions with additional constraints to resolve conflicts. An example of a conflict can be that crew 932 wants a flight to depart on time to avoid crew exceeding working hours while passenger 938 wants to delay flight to maintain connection because a flight brining a group of passengers to the airport is delayed.

For example, if a group of passengers (e.g., passenger 938) are arriving late for a connecting flight, the holistic solution unified API 802 can configure the gate 934 to minimize the path between the gates for these passengers while considering costs and other operational factors. Another example involves balancing the solution between the operations 930 and the crew 932. The operations 930 can entail selecting which aircrafts will fly where and the crew 932 are the people on those aircrafts. Solvers that analyze the operations by figuring out which aircraft to fly where then work out how to put the crew on them can often time find at the end of the process that there are not enough crew left for all the flights. So then, the process must go back and change the operations. However, the embodiments herein can analyze the solution for the crew 932 and understand what is needed to set up the operations 930 correctly to obtain a solution that is optimal that can also be crewed. The continuous feedback 928 enable the configuration between the operations 930 and the crew 932 to obtain an optimal solution.

Short-term learning can be used to feed long-term learning. The embodiments herein can learn how the siloed influencers can affect particular verticals by employing a recursive learning algorithm, continuous learning algorithm or backward propagation of learning across multiple verticals or the entire system. If there is a conflict between the crew and the aircrafts or operation that can be solved by a delay of minutes, the recursive learning algorithm, the continuous learning algorithm or the backward propagation of learning can analyze and learn the ripple effect of the delay. Optimization of the silos to a point solution without considering the other influencers can wreck the entire network if there is a disruption of one or more silos. By stimulating and providing feedback, the schedule simulator 804 can provide solutions that are robust to disruption.

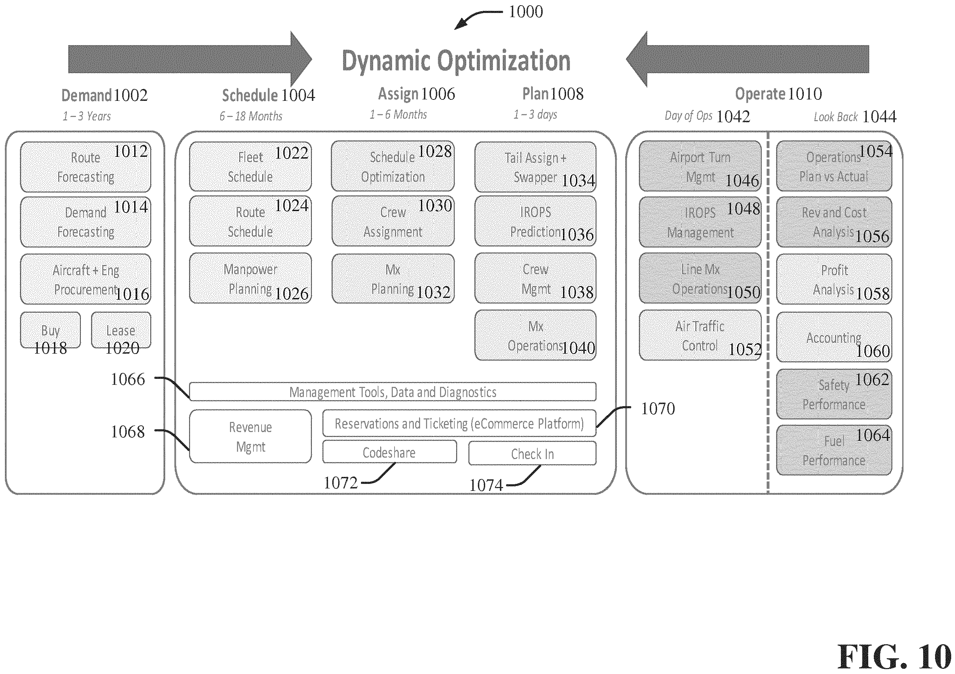

FIG. 10 illustrates an example, non-limiting flow diagram representative of example dynamic optimization 1000 of airline operations in accordance with one or more embodiments described herein. Repetitive description of like elements employed in other embodiments described herein is omitted for sake of brevity. The dynamic optimization 1000 can be a timeline of how airlines operate. In sequential order from left to right, the dynamic optimization 1000 can include the demand 1002, schedule 1004, assign 1006, plan 1008 and operate 1010. Both the demand 1002 and the schedule 1004 can be the strategic plan for higher resource planning without assigning specific aircrafts, crews or resources. The demand 1002 can begin 2-3 years prior to the day of operations and can include route forecasting 1012 (e.g., which routes should an aircraft fly), demand forecasting 1014 (e.g., where is the passenger demand), aircraft and engineering procurement 1016 (e.g., aircrafts and engineers needed to operate those routes), buy 1018 (e.g., which aircrafts and equipment to buy) and lease 1020 (e.g., which aircrafts and equipment to lease). The schedule 1004 can begin 6-18 months prior to the day of operation and can include fleet schedule 1022 (e.g., scheduling flights), route schedule 1024 (e.g., route schedule for the flights) and manpower planning 1026 (e.g., people needed to operate those routes and fleets).

Once the strategic plan for the demand 1002 and the schedule 1004 are in place, resources can begin to be assigned. The assign 1006 can begin 1-6 months prior to the day of operations and can include schedule optimization 1028 (e.g., optimize the schedule), crew assignment 1030 (e.g., assigning the crew) and Mx planning 1032 (e.g., scheduling maintenance). At this stage, the crew assignment 1030 can include the actual crew rosters with the names of the people that will work the flights. The Mx planning 1032 can entail planning where the aircrafts need to be so that maintenance can be performed on those aircrafts.

As the day of operations approaches, plans can start to change. The tails may need to be swapped, the weather may have an effect or a standby crew may need to be used for a crew that called in sick. If a flight gets canceled, the crew on that flight may have to be reassigned. At 1-3 days prior to the day of operations, the dynamic optimization 1000 can include the plan 1008. The plan 1008 can include tail assignment and swapper 1034 (e.g., assigning and swapping aircrafts with tail registration numbers), irregular operations (IROPS) prediction 1036 (e.g., predicting irregularities/disruptions), crew management 1038 (e.g., handling changes in crew assignment) and Mx operations 1040 (e.g., performing maintenance on the aircrafts).

On the day of operations, airlines try to keep on schedule and collect data to look back on. The operate 1010 can be divided into day of operations 1042 and look back 1044. The day of operations 1042 can include airport turn management 1046 (e.g., optimizing the time interval between arrival and departure of the aircrafts), IROPS management 1048 (e.g., managing irregularities/disruptions), line Mx operations 1050 (e.g., maintenance during normal turnaround periods) and air traffic control 1052 (e.g., interaction with air traffic control). The look back 1044 can include operations plan versus actual 1054 (e.g., comparing the planned operations with the actual operations), revenue and cost analysis 1056 (e.g., analyzing revenue and cost), profit analysis 1058 (e.g., determining whether the airline made money), accounting 1060 (e.g., prepare financial records), safety performance 1062 (e.g., determining safety statistics) and fuel performance 1064 (e.g., determining fuel usage).

In addition to following a timeline for the dynamic optimization 1000, airlines can also utilize other functions and features such as management tools, data and diagnostics 1066 (e.g., tools to manage operations); revenue management 1068 (e.g., tools to manage revenue); reservations and ticketing (eCommerce Platform) 1070 (e.g., tools to book flights); codeshare 1072 (e.g., revenue sharing partnership between airlines) and check in 1074 (e.g., tools to check in).

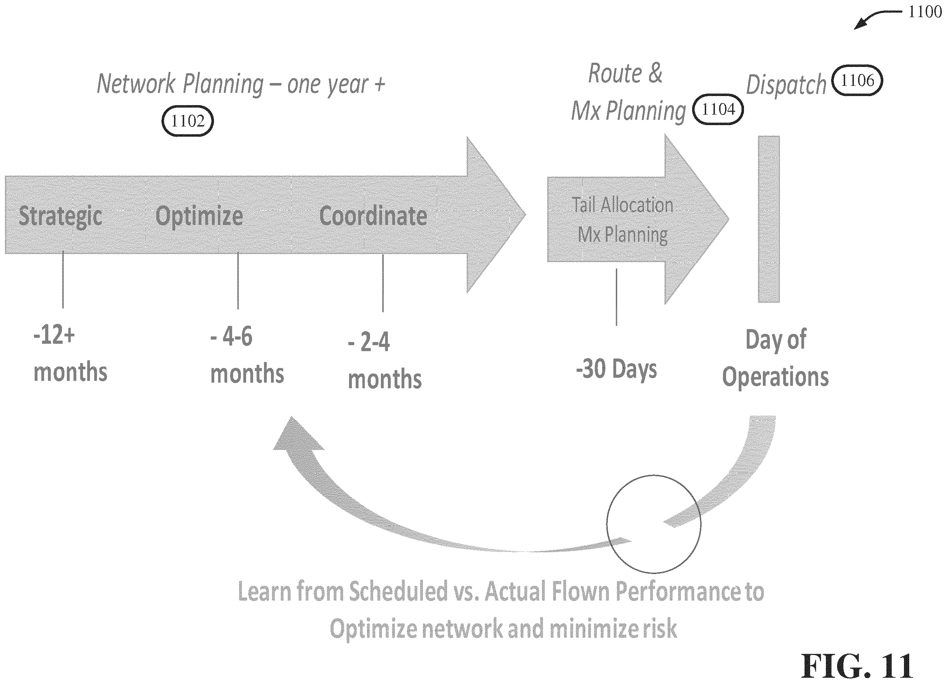

FIG. 11 illustrates an example, non-limiting planning pipeline 1100 in accordance with an aspect of the invention the system can learn from scheduled versus actual flown performance data to optimize network planning and minimize risks in accordance with one or more embodiments described herein. Repetitive description of like elements employed in other embodiments described herein is omitted for sake of brevity. The planning pipeline 1100 is another view of what can happen at the airlines. From left to right is a timeline of how the airlines can operate.

The network planning 1102 can begin a year or more prior to the day of operations. The network planning 1102 can include strategic planning beginning at 12+ months prior to the day of operations. Optimizing the schedule can begin at 4-6 months prior to the day of operations. Coordinating the crew assignment can begin at 2-4 months prior to the day of operations. The route and Mx planning 1104 can include tail allocation and Mx planning beginning at 30 days prior to the day of operations. Data can be collected in connection to the dispatch 1106 on the day of operations to provide feedback to the network planning 1102. The feedback can be provided for by learning from the scheduled versus actual flown performance, which can be used to optimize the airline operations from the network planning 1102 through the dispatch 1106 on the day of operations and minimize risks.

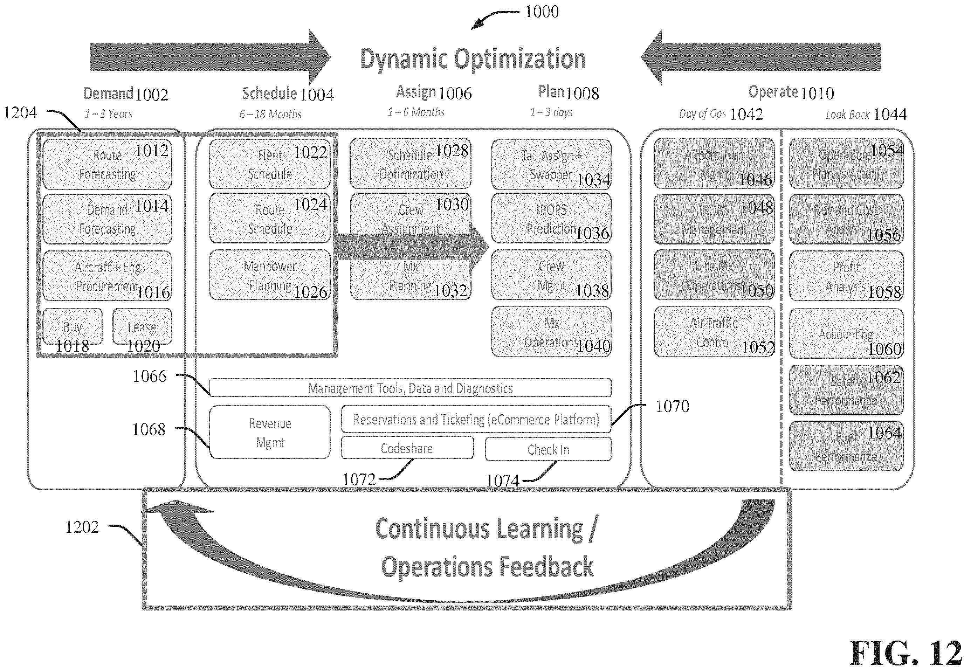

FIG. 12 illustrates an example, non-limiting flow diagram representative of example dynamic optimization 1000 of airline operations utilizing continuous learning and operations feedback that can be implemented by the system in accordance with one or more embodiments described herein. Repetitive description of like elements employed in other embodiments described herein is omitted for sake of brevity. The continuous learning/operations feedback 1202 can be gleaned from the day of operations 1042 and look back 1044. The continuous learning/operations feedback 1202 can link the outcome of the operate 1010 back to the network planning 1204 (e.g., demand 1002 and schedule 1004). The continuous learning/operations feedback 1202 can also be used to make connection between the different segments of the airline operations, e.g., network planning 1204, assign 1006, plan 1008 and operate 1010. The network planning 1204 that contain the continuous learning/operations feedback 1202 can be pushed forward through the day of operations to provide for scheduling flexibility and dynamic optimization.

An example of how the continuous learning/operations feedback 1202 can connect/link the different segments of the operation process to provide for a flexible, dynamic operations can be based on the fleet schedule 1022. The fleet schedule 1022 can maximize the utilization of the aircrafts to schedule as many flights as possible subject to any constraints. Maximizing aircraft utilization can lead to an aggressive turn-time and ground-time (e.g., time between flights). The constraints can be the time to prepare the aircraft for the next flight such as maintenance and crew arrival. If inadequate margin is provided in the fleet schedule 1022, reliability can be lost in the fleet. A tradeoff of reduced revenue with increased ground-time is improved maintenance and crew transfers, which can result in overall cost savings.

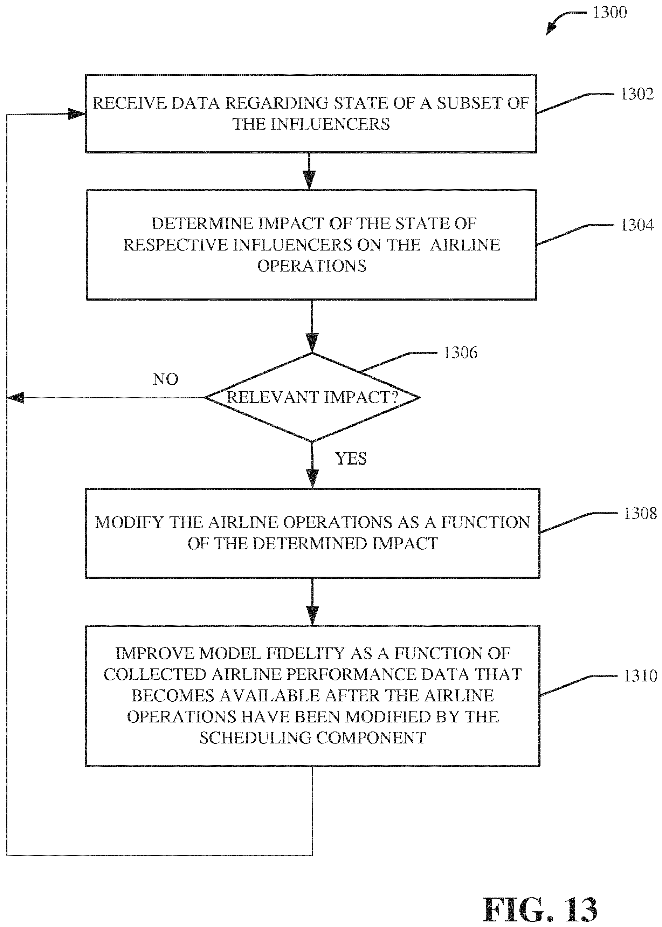

FIG. 13 illustrates an example, non-limiting computer-implemented method 1300 facilitating airline operations and planning management in accordance with one or more embodiments described herein. At 1302, the computer-implemented method 1300 can comprise receiving (e.g., via the input component 106) data (e.g., real-time data) regarding state of a subset of influencers (e.g., demand forecasting, fleet schedule, route schedule, Mx planning, crew assignment, asset assignment, operations, crew, gate, maintenance, passengers, assets, weather, aircraft crew arrival time and health, airport security, airport ground crew, airline ticket counters, aircraft components, air traffic control, other airplanes and associated influencers, luggage handling, airport trams, airport equipment, cloud-based services, networks and associated hardware/software, regional local and destination ground traffic, emergency response, local and federal authorities and agencies, sensors and like items that have impact on airline operations). At 1304, the computer-implemented method 1300 can comprise determining (e.g., via the impact component 114) impact of the state of respective influencers on the airline operations. At 1306, the computer-implemented method 1300 can comprise determining (e.g., via the impact component 114) whether the impact is relevant. If no, the process returns to 1302. If yes, the process proceeds to 1308. At 1308, the computer-implemented method 1300 can comprise modifying (e.g., via the scheduling component 116) the airline operations as a function of the determined (e.g., inferred) impact. At 1310, the computer-implemented method 1310 can comprise improving (e.g., via the update component 118 using artificial intelligence or machine learning) model fidelity as a function of collected airline performance data that becomes available after the airline operations have been modified by the scheduling component 116.

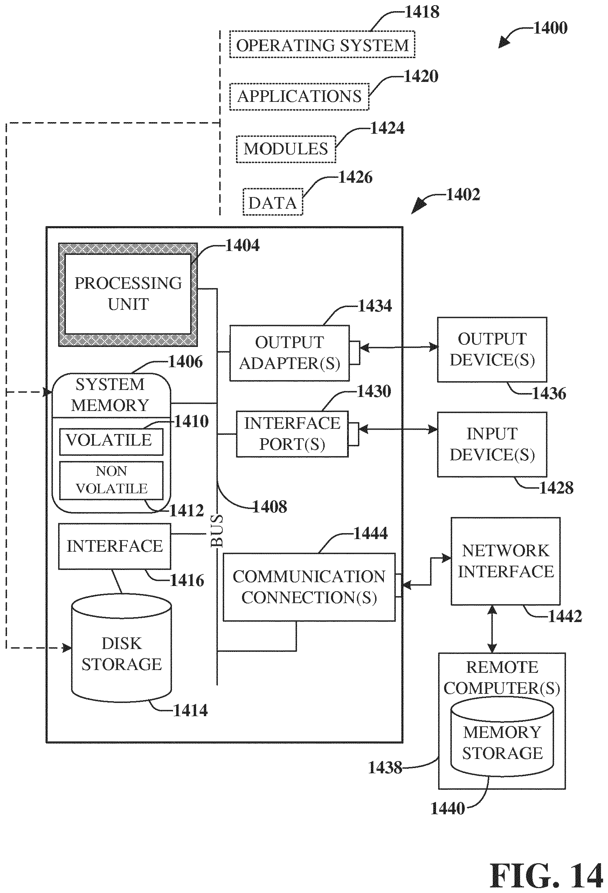

In order to provide a context for the various aspects of the disclosed subject matter, FIG. 14 as well as the following discussion are intended to provide a general description of a suitable environment in which the various aspects of the disclosed subject matter can be implemented. FIG. 14 illustrates a block diagram of an example, non-limiting operating environment in which one or more embodiments described herein can be facilitated. Repetitive description of like elements employed in other embodiments described herein is omitted for sake of brevity.

With reference to FIG. 14, a suitable environment 1400 for implementing various aspects of the claimed subject matter includes a computer 1402. The computer 1402 includes a processing unit 1404, a system memory 1406, a codec 1405, and a system bus 1408. The system bus 1408 couples system components including, but not limited to, the system memory 1406 to the processing unit 1404. The processing unit 1404 can be any of various available processors. Dual microprocessors and other multiprocessor architectures also can be employed as the processing unit 1404.

The system bus 1408 can be any of several types of bus structure(s) including the memory bus or memory controller, a peripheral bus or external bus, and/or a local bus using any variety of available bus architectures including, but not limited to, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Card Bus, Universal Serial Bus (USB), Advanced Graphics Port (AGP), Personal Computer Memory Card International Association bus (PCMCIA), Firewire (IEEE 1394), and Small Computer Systems Interface (SCSI).

The system memory 1406 includes volatile memory 1410 and non-volatile memory 1412. The basic input/output system (BIOS), containing the basic routines to transfer information between elements within the computer 1402, such as during start-up, is stored in non-volatile memory 1412. By way of illustration, and not limitation, non-volatile memory 1412 can include read only memory (ROM), programmable ROM (PROM), electrically programmable ROM (EPROM), electrically erasable programmable ROM (EEPROM), or flash memory. Volatile memory 1410 includes random access memory (RAM), which acts as external cache memory. According to present aspects, the volatile memory may store the write operation retry logic (not shown in FIG. 14) and the like. By way of illustration and not limitation, RAM is available in many forms such as static RAM (SRAM), dynamic RAM (DRAM), synchronous DRAM (SDRAM), double data rate SDRAM (DDR SDRAM), and enhanced SDRAM (ESDRAM).

Computer 1402 may also include removable/non-removable, volatile/non-volatile computer storage media. FIG. 14 illustrates, for example, a disk storage 1414. Disk storage 1414 includes, but is not limited to, devices like a magnetic disk drive, solid state disk (SSD) floppy disk drive, tape drive, Zip drive, LS-110 drive, flash memory card, or memory stick. In addition, disk storage 1414 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 1414 to the system bus 1408, a removable or non-removable interface is typically used, such as interface 1416.

It is to be appreciated that FIG. 14 describes software, software in execution, hardware, and/or software in combination with hardware that acts as an intermediary between users and the basic computer resources described in the suitable operating environment 1400. Such software includes an operating system 1418. Operating system 1418, which can be stored on disk storage 1414, acts to control and allocate resources of the computer system 1402. Applications 1420 take advantage of the management of resources by operating system 1418 through program modules 1424, and program data 1426, such as the boot/shutdown transaction table and the like, stored either in system memory 1406 or on disk storage 1414. It is to be appreciated that the claimed subject matter can be implemented with various operating systems or combinations of operating systems. For example, applications 1420 and program data 1426 can include software implementing aspects of this disclosure.

A user enters commands or information into the computer 1402 through input device(s) 1428, non-limiting examples of which can include a pointing device such as a mouse, trackball, stylus, touch pad, keyboard, microphone, joystick, game pad, satellite dish, scanner, TV tuner card, digital camera, digital video camera, electronic nose, web camera, or other device that allows the user to interact with computer 1402. These and other input devices connect to the processing unit 1404 through the system bus 1408 *via* interface port(s) 1430. Interface port(s) 1430 include, for example, a serial port, a parallel port, a game port, and a universal serial bus (USB). Output device(s) 1436 use some of the same type of ports as input device(s) 1428. Thus, for example, a USB port may be used to provide input to computer 1402, and to output information from computer 1402 to an output device 1436. Output adapter 1434 is provided to illustrate that there are some output devices 1436 like monitors, speakers, and printers, among other output devices 1436, which require special adapters. The output adapters 1434 include, by way of illustration and not limitation, video and sound cards that provide a means of connection between the output device 1436 and the system bus 1408. It should be noted that other devices and/or systems of devices provide both input and output capabilities such as remote computer(s) 1438.

Computer 1402 can operate in a networked environment using logical connections to one or more remote computers, such as remote computer(s) 1438. The remote computer(s) 1438 can be a personal computer, a server, a router, a network PC, a workstation, a microprocessor based appliance, a peer device, a smart phone, a tablet, or other network node, and typically includes many of the elements described relative to computer 1402. For purposes of brevity, only a memory storage device 1440 is illustrated with remote computer(s) 1438. Remote computer(s) 1438 is logically connected to computer 1402 through a network interface 1442 and then connected *via* communication connection(s) 1444. Network interface 1442 encompasses wire and/or wireless communication networks such as local-area networks (LAN), wide-area networks (WAN), and cellular networks. LAN technologies include Fiber Distributed Data Interface (FDDI), Copper Distributed Data Interface (CDDI), Ethernet, Token Ring and the like. WAN technologies include, but are not limited to, point-to-point links, circuit switching networks like Integrated Services Digital Networks (ISDN) and variations thereon, packet switching networks, and Digital Subscriber Lines (DSL). Communication connection(s) 1444 refers to the hardware/software employed to connect the network interface 1442 to the bus 1408. While communication connection 1444 is shown for illustrative clarity inside computer 1402, it can also be external to computer 1402. The hardware/software necessary for connection to the network interface 1442 includes, for exemplary purposes only, internal and external technologies such as, modems including regular telephone grade modems, cable modems and DSL modems, ISDN adapters, wired and wireless Ethernet cards, hubs, and routers.

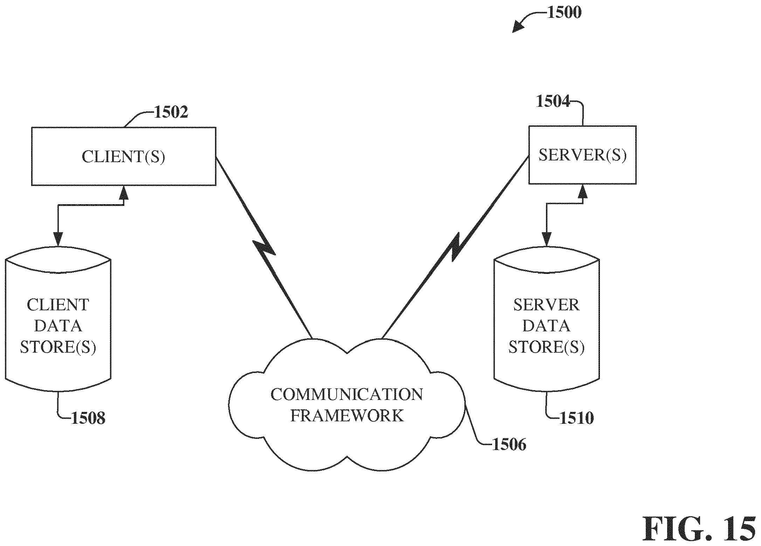

Referring now to FIG. 15, there is illustrated a schematic block diagram of a computing environment 1500 in accordance with this specification. The system 1500 includes one or more client(s) 1502, (e.g., computers, smart phones, tablets, cameras, PDA's). The client(s) 1502 can be hardware and/or software (*e.g*., threads, processes, computing devices). The client(s) 1502 can house cookie(s) and/or associated contextual information by employing the specification, for example.

The system 1500 also includes one or more server(s) 1504. The server(s) 1504 can also be hardware or hardware in combination with software (*e.g*., threads, processes, computing devices). The servers 1504 can house threads to perform transformations of media items by employing aspects of this disclosure, for example. One possible communication between a client 1502 and a server 1504 can be in the form of a data packet adapted to be transmitted between two or more computer processes wherein data packets may include coded analyzed headspaces and/or input. The data packet can include a cookie and/or associated contextual information, for example. The system 1500 includes a communication framework 1506 (*e.g*., a global communication network such as the Internet) that can be employed to facilitate communications between the client(s) 1502 and the server(s) 1504.

Communications can be facilitated *via* a wired (including optical fiber) and/or wireless technology. The client(s) 1502 are operatively connected to one or more client data store(s) 1508 that can be employed to store information local to the client(s) 1502 (*e.g*., cookie(s) and/or associated contextual information). Similarly, the server(s) 1504 are operatively connected to one or more server data store(s) 1510 that can be employed to store information local to the servers 1504.

In one exemplary implementation, a client 1502 can transfer an encoded file, (e.g., encoded media item), to server 1504. Server 1504 can store the file, decode the file, or transmit the file to another client 1502. It is to be appreciated, that a client 1502 can also transfer uncompressed file to a server 1504 and server 1504 can compress the file and/or transform the file in accordance with this disclosure. Likewise, server 1504 can encode information and transmit the information via communication framework 1506 to one or more clients 1502.

The illustrated aspects of the disclosure may also be practiced in distributed computing environments where certain tasks are performed by remote processing devices that are linked through a communications network. In a distributed computing environment, program modules can be located in both local and remote memory storage devices.

Moreover, it is to be appreciated that various components described herein (e.g., detection components, input components, sample delivery components, and the like) can include electrical circuit(s) that can include components and circuitry elements of suitable value in order to implement the aspects of this innovation(s). Furthermore, it can be appreciated that many of the various components can be implemented on one or more integrated circuit (IC) chips. In one exemplary implementation, a set of components can be implemented in a single IC chip. In other exemplary implementations, one or more of respective components are fabricated or implemented on separate IC chips.

What has been described above includes examples of the implementations of the present invention. It is, of course, not possible to describe every conceivable combination of components or methodologies for purposes of describing the claimed subject matter, but it is to be appreciated that many further combinations and permutations of this innovation are possible. Accordingly, the claimed subject matter is intended to embrace all such alterations, modifications, and variations that fall within the spirit and scope of the appended claims. Moreover, the above description of illustrated implementations of this disclosure, including what is described in the Abstract, is not intended to be exhaustive or to limit the disclosed implementations to the precise forms disclosed. While specific implementations and examples are described herein for illustrative purposes, various modifications are possible that are considered within the scope of such implementations and examples, as those skilled in the relevant art can recognize.

In particular and in regard to the various functions performed by the above described components, devices, circuits, systems and the like, the terms used to describe such components are intended to correspond, unless otherwise indicated, to any component which performs the specified function of the described component (*e.g*., a functional equivalent), even though not structurally equivalent to the disclosed structure, which performs the function in the herein illustrated exemplary aspects of the claimed subject matter. In this regard, it will also be recognized that the innovation includes a system as well as a computer-readable storage medium having computer-executable instructions for performing the acts and/or events of the various methods of the claimed subject matter.

The aforementioned systems/circuits/modules have been described with respect to interaction between several components/blocks. It can be appreciated that such systems/circuits and components/blocks can include those components or specified sub-components, some of the specified components or sub-components, and/or additional components, and according to various permutations and combinations of the foregoing. Sub-components can also be implemented as components communicatively coupled to other components rather than included within parent components (hierarchical). Additionally, it should be noted that one or more components may be combined into a single component providing aggregate functionality or divided into several separate sub-components, and any one or more middle layers, such as a management layer, may be provided to communicatively couple to such sub-components in order to provide integrated functionality. Any components described herein may also interact with one or more other components not specifically described herein but known by those of skill in the art.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard deviation found in their respective testing measurements. Moreover, all ranges disclosed herein are to be understood to encompass any and all sub-ranges subsumed therein. For example, a range of "less than or equal to 11" can include any and all sub-ranges between (and including) the minimum value of zero and the maximum value of 11, that is, any and all sub-ranges having a minimum value of equal to or greater than zero and a maximum value of equal to or less than 11, *e.g*., 1 to 5. In certain cases, the numerical values as stated for the parameter can take on negative values.

In addition, while a particular feature of this innovation may have been disclosed with respect to only one of several implementations, such feature may be combined with one or more other features of the other implementations as may be desired and advantageous for any given or particular application. Furthermore, to the extent that the terms "includes," "including," "has," "contains," variants thereof, and other similar words are used in either the detailed description or the claims, these terms are intended to be inclusive in a manner similar to the term "comprising" as an open transition word without precluding any additional or other elements.

Reference throughout this specification to "one implementation," or "an implementation," means that a particular feature, structure, or characteristic described in connection with the implementation is included i*n at* least one implementation. Thus, the appearances of the phrase "in one implementation," or "in an implementation," in various places throughout this specification are not necessarily all referring to the same implementation. Furthermore, the particular features, structures, or characteristics may be combined in any suitable manner in one or more implementations.

Further, references throughout this specification to an "item," or "file," means that a particular structure, feature or object described in connection with the implementations are not necessarily referring to the same object. Furthermore, a "file" or "item" can refer to an object of various formats.

As used in this application, the terms "component," "module," "system," or the like are generally intended to refer to a computer-related entity, either hardware (*e.g*., a circuit), a combination of hardware and software, or an entity related to an operational machine with one or more specific functionalities. For example, a component may be, but is not limited to being, a process running on a processor (*e.g*., digital signal processor), a processor, an object, an executable, a thread of execution, a program, and/or a computer. By way of illustration, both an application running on a controller and the controller can be a component. One or more components may reside within a process and/or thread of execution and a component may be localized on one computer and/or distributed between two or more computers. While separate components are depicted in various implementations, it is to be appreciated that the components may be represented in one or more common component. Further, design of the various implementations can include different component placements, component selections, etc., to achieve an optimal performance. Further, a "device" can come in the form of specially designed hardware; generalized hardware made specialized by the execution of software thereon that enables the hardware to perform specific function (e.g., media item aggregation); software stored on a computer readable medium; or a combination thereof.

Moreover, the words "example" or "exemplary" are used herein to mean serving as an example, instance, or illustration. Any aspect or design described herein as "exemplary" is not necessarily to be construed as preferred or advantageous over other aspects or designs. Rather, use of the words "example" or "exemplary" is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

Various aspects and embodiments of the present invention are defined by the following numbered clauses:
1. A system facilitating airline operations and planning management, comprising:
   a processor that executes computer implemented components stored in memory;
   a model generation component that generates a model of a set of influencers that affect the airline operations;
   an input component that receives data regarding state of a subset of the influencers;
   an impact component that employs the model to determine impact of the state of respective influencers on the airline operations;
   a scheduling component that modifies the airline operations as a function of the determined impact; and
   an update component that updates the model to improve model fidelity as a function of collected airline performance data that becomes available after the airline operations have been modified by the scheduling component.
2. The system of clause 1, wherein the update component updates the model using artificial intelligence or machine learning, wherein the model employs a recursive learning algorithm or backward propagation of learning across other models or continuous learning algorithm.
3. The system of any preceding clause, further comprising a notification component that sends a notification that includes routing and suggested departure from home to airport information to a passenger based on impact information generated from the model regarding at least one of airport security queue time, ticket counter queue time or road traffic information.
4. The system of any preceding clause, wherein the scheduling component modifies flight departure time as a function of a subset of the influencers.
5. The system of any preceding clause, further comprising an incentive component that performs a utility-based analysis based on analysis by the model and profiles of passengers to generate targeted incentives to a subset of the passengers.
6. The system of any preceding clause, further comprising a tracking component that tracks in real-time passengers and influencers, and wherein the scheduling component schedules boarding of an airplane based on the tracking information.
7. The system of any preceding clause, wherein the scheduling component and incentive component coordinate to schedule, sell or provision restaurant services to a passenger as a function of the analysis by the model.
8. The system of any preceding clause, wherein the model learns the impact of respective influencers and directs the scheduling component to revise the airline operations as a function of the impact.
9. The system of any preceding clause, further comprising an optimization component that generates inferences, based on the model, regarding potential points of disruption, weaknesses or bottlenecks in the airline operations and directs the scheduling component to revise the airline operations to facilitate optimizing the airline operations.
10. The system of any preceding clause, wherein the scheduling component schedules as a function of robustness of the system with respect to disruption, weaknesses or bottlenecks.
11. The system of any preceding clause, wherein the scheduling component uses artificial intelligence, machine learning or continuous feedback to resolve conflict, disagreement, or discrepancies between the determined impact of the state of respective influencers on the airline operations.
12. A computer-implemented method facilitating airline operations and planning management, comprising:
   generating, by a system operatively coupled to a processor, a model of a set of influencers that affect the airline operations;
   receiving, by the system, data regarding state of a subset of the influencers;
   employing, by the system, the model to determine impact of the state of respective influencers on the airline operations;
   modifying, by the system, the airline operations as a function of the determined impact; and
   updating, by the system, the model to improve model fidelity as a function of collected airline performance data that becomes available after the airline operations have been modified by the scheduling component.
13. The computer-implemented method of any preceding clause, further comprising updating the model using artificial intelligence or machine learning, and employing a recursive learning algorithm or backward propagation of learning across other models or continuous learning algorithm.
14. The computer-implemented method of any preceding clause, further comprising sending a notification that includes routing and suggested departure from home to airport information to a passenger based on impact information generated from the model regarding at least one of airport security queue time, ticket counter queue time or road traffic information.
15. The computer-implemented method of any preceding clause, further comprising modifying flight departure time as a function of a subset of the influencers.
16. The computer-implemented method of any preceding clause, further comprising performing a utility-based analysis based on analysis by the model and profiles of passengers to generate targeted incentives to a subset of the passengers.
17. The computer-implemented method of any preceding clause, further comprising tracking in real-time passengers and influencers, and wherein the scheduling component schedules boarding of an airplane based on the tracking information.
18. The computer-implemented method of any preceding clause, further comprising learning the impact of respective influencers and directing revision of the airline operations as a function of the impact.
19. The computer-implemented method of any preceding clause, further comprising generating inferences, based on the model, regarding potential points of disruption, weaknesses or bottlenecks in the airline operations and directing revision of the airline operations to facilitate optimizing the airline operations.
20. A computer program product for facilitating airline operations and planning management, the computer program product comprising a computer readable storage medium having program instructions embodied therewith, the program instructions executable by a processor to cause the processor to:
   generate a model of a set of influencers that affect the airline operations;
   receive data regarding state of a subset of the influencers;
   employ the model to determine impact of the state of respective influencers on the airline operations;
   modify the airline operations as a function of the determined impact; and
   update the model to improve model fidelity as a function of collected airline performance data that becomes available after the airline operations have been modified by the scheduling component.

## Claims

1. A system (100) facilitating airline operations and planning management, comprising:
a processor (102) that executes computer implemented components stored in memory;
a model generation component (108) that generates a model (110) of a set of influencers (107) that affect the airline operations;
an input component (106) that receives data regarding state of a subset of the influencers;
an impact component (114) that employs the model to determine impact of the state of respective influencers on the airline operations;
a scheduling component (116) that modifies the airline operations as a function of the determined impact; and
an update component (118) that updates the model to improve model fidelity as a function of collected airline performance data that becomes available after the airline operations have been modified by the scheduling component.

2. The system (100) of claim 1, wherein the update component updates the model using artificial intelligence or machine learning, wherein the model employs a recursive learning algorithm or backward propagation of learning across other models or continuous learning algorithm.

3. The system (100) of either of claim 1 or 2, further comprising a notification component that sends a notification that includes routing and suggested departure from home to airport information to a passenger based on impact information generated from the model regarding at least one of airport security queue time, ticket counter queue time or road traffic information.

4. The system (100) of any preceding claim, wherein the scheduling component modifies flight departure time as a function of a subset of the influencers.

5. The system (100) of any preceding claim, further comprising an incentive component that performs a utility-based analysis based on analysis by the model and profiles of passengers to generate targeted incentives to a subset of the passengers.

6. The system (100) of any preceding claim, further comprising a tracking component that tracks in real-time passengers and influencers, and wherein the scheduling component schedules boarding of an airplane based on the tracking information.

7. The system (100) of claim 5, wherein the scheduling component and incentive component coordinate to schedule, sell or provision restaurant services to a passenger as a function of the analysis by the model.

8. The system (100) of any preceding claim, wherein the model learns the impact of respective influencers and directs the scheduling component to revise the airline operations as a function of the impact.

9. The system (100) of claim 8, further comprising an optimization component that generates inferences, based on the model, regarding potential points of disruption, weaknesses or bottlenecks in the airline operations and directs the scheduling component to revise the airline operations to facilitate optimizing the airline operations.

10. The system (100) of either of claim 8 or 9, wherein the scheduling component schedules as a function of robustness of the system with respect to disruption, weaknesses or bottlenecks.

11. The system (100) of any preceding claim, wherein the scheduling component uses artificial intelligence, machine learning or continuous feedback to resolve conflict, disagreement, or discrepancies between the determined impact of the state of respective influencers on the airline operations.

12. A computer-implemented method facilitating airline operations and planning management, comprising:
generating, by a system (100) operatively coupled to a processor (102), a model of a set of influencers that affect the airline operations;
receiving, by the system, data regarding state of a subset of the influencers;
employing, by the system, the model to determine impact of the state of respective influencers on the airline operations;
modifying, by the system, the airline operations as a function of the determined impact; and
updating, by the system, the model to improve model fidelity as a function of collected airline performance data that becomes available after the airline operations have been modified by the scheduling component.

13. The computer-implemented method of claim 12, further comprising updating the model using artificial intelligence or machine learning, and employing a recursive learning algorithm or backward propagation of learning across other models or continuous learning algorithm.

14. The computer-implemented method of either of claim 12 or 13, further comprising sending a notification that includes routing and suggested departure from home to airport information to a passenger based on impact information generated from the model regarding at least one of airport security queue time, ticket counter queue time or road traffic information.

15. A computer program product for facilitating airline operations and planning management, the computer program product comprising a computer readable storage medium having program instructions embodied therewith, the program instructions executable by a processor to cause the processor to:
generate a model of a set of influencers that affect the airline operations;
receive data regarding state of a subset of the influencers;
employ the model to determine impact of the state of respective influencers on the airline operations;
modify the airline operations as a function of the determined impact; and
update the model to improve model fidelity as a function of collected airline performance data that becomes available after the airline operations have been modified by the scheduling component.
